# FASCICULE DE BREVET EUROPEEN

(11) **EP 3 259 476 B1**
(45) Date de publication et mention de la délivrance du brevet: **10.04.2019**
(21) Numéro de dépôt: 16707913.6
(22) Date de dépôt: 12.02.2016
(51) Int. Cl.: F16H 61/4096, F04B 1/047, F03C 1/047, F03C 1/26, B60K 17/10

(54) **DEPHASEUR DE DISTRIBUTEUR POUR MOTEUR-POMPE HYDRAULIQUE**
VERTEILER-PHASENVERSTELLER FÜR EINE HYDRAULISCHE MOTOR-PUMPEN-AGGREGAT
DISTRIBUTOR PHASE SHIFTER FOR A HYDRAULIC MOTOR PUMP UNIT

(30) Priorité: 20.02.2015 FR 1551496
(43) Date de publication de la demande: 27.12.2017
(73) Titulaire: Rabhi, Vianney, 69006 Lyon (FR)
(72) Inventeur: Rabhi, Vianney, 69006 Lyon (FR)
(74) Mandataire: Godard, Xavier
(86) Numéro de dépôt international: PCT/FR2016/050326
(87) Numéro de publication internationale: WO 2016/132051

(56) Documents cités:
- EP-A1- 2 617 985
- FR-A1- 2 359 277
- FR-A1- 3 001 775
- FR-A2- 2 473 619

## Description

La présente invention est relative à un déphaseur de distributeur pour moteur-pompe hydraulique qui constitue un perfectionnement du moteur-pompe hydraulique objet de la demande de brevet français N°3 001 775 en date du 22.05.2013 appartenant au demandeur.

Le moteur-pompe hydraulique objet de ladite demande comporte un rotor central de moteur-pompe à l'intérieur duquel sont aménagés des cylindres hydrauliques. Des pistons hydrauliques peuvent se mouvoir dans lesdits cylindres. Lorsque le rotor central tourne par rapport au bâti de moteur-pompe, lesdits cylindres sont alternativement mis en relation avec un conduit interne d'entrée-sortie puis avec un conduit externe d'entrée-sortie par un distributeur d'entrée-sortie constitué soit d'un stator cylindrique, soit d'un stator axial. Pour cela, ledit distributeur présente audit rotor central un collecteur angulaire entrée-sortie de conduit interne qui est relié au conduit interne d'entrée-sortie, et un collecteur angulaire entrée-sortie de conduit externe qui est relié au conduit externe d'entrée-sortie.

De l'huile de moteur-pompe peut ainsi alternativement passer dudit distributeur aux dits cylindres puis desdits cylindres audit distributeur via lesdits collecteurs notamment grâce à un canal interne d'entrée-sortie de rotor central qui relie chaque cylindre hydraulique à un orifice d'entrée-sortie de rotor central qui peut se placer soit au regard du collecteur angulaire entrée-sortie de conduit interne, soit au regard du angulaire entrée-sortie de conduit externe.

On note que dans la demande de brevet N°3 001 775 appartenant au demandeur, le phasage angulaire du distributeur d'entrée-sortie par rapport au bâti de moteur-pompe est fixe. Or, les conditions de fonctionnement dudit moteur-pompe peuvent varier notamment en pression et en cylindrée, et selon que ledit moteur-pompe opère en mode « pompe » ou en mode « moteur ». A chaque dite condition de fonctionnement correspond - sur un critère de meilleur rendement du moteur-pompe hydraulique - un phasage angulaire optimum du distributeur d'entrée-sortie par rapport au bâti de moteur-pompe.

En conséquence, il serait souhaitable que le phasage du distributeur d'entrée-sortie soit variable notamment en fonction de la pression, de la cylindrée et du mode « pompe » ou « moteur » sous lesquels fonctionne ledit moteur-pompe et ceci, dans l'objectif d'optimiser le rendement de ce dernier.

L'intérêt de ce phasage variable découle notamment de la compressibilité non-nulle de l'huile de moteur-pompe mise en oeuvre dans ledit moteur-pompe. En effet, ladite compressibilité engendre des pertes irrécupérables de travail lorsqu'il existe un écart de pression important entre d'une part, un canal interne d'entrée-sortie de rotor central relié à un cylindre hydraulique et d'autre part, le collecteur angulaire entrée-sortie de conduit interne ou externe et ceci, au moment ou ledit canal interne est mis en relation via son orifice d'entrée-sortie de rotor central avec ledit collecteur.

En effet, lorsque ledit canal est mis en relation avec ledit collecteur angulaire, si la pression régnant dans ledit canal est supérieure à celle régnant dans ledit collecteur, l'huile de moteur-pompe contenue dans ledit canal se détend dans ledit collecteur sans produire de travail de sorte que l'énergie de compression de l'huile de moteur-pompe se dissipe sous forme de chaleur sans pouvoir être convertie en travail utile par le rotor central de moteur-pompe.

Il en est de même si dans c'est la pression qui règne dans le collecteur angulaire entrée-sortie de conduit interne ou externe qui est supérieure à celle régnant dans le canal interne d'entrée-sortie de rotor central au moment ou ce dernier est mis en relation avec ledit collecteur.

Pour une pression et une cylindrée données du moteur-pompe hydraulique selon la demande de brevet N°3 001 775, un seul phasage desdits collecteurs angulaires par rapport au bâti de moteur-pompe permet audit moteur-pompe de délivrer son meilleur rendement quand ledit moteur-pompe opère en mode « pompe », tandis qu'un seul autre phasage desdits collecteurs confère audit moteur-pompe le meilleur rendement possible lorsque ce dernier fonctionne en mode « moteur ».

Pour obtenir du moteur-pompe selon la demande de brevet N°3 001 775 un rendement maximal, il faudrait que le secteur angulaire occupé par les collecteurs angulaires entrée-sortie de conduit interne et externe soit variable, de même qu'il faudrait que soit variable la position angulaire desdits collecteurs par rapport au bâti du moteur-pompe.

Dans la pratique malheureusement, il est difficile voire impossible de faire varier le secteur angulaire occupé par les collecteurs angulaires entrée-sortie de conduit externe, tout comme il est difficile voire impossible de faire varier la position angulaire de chaque dit collecteur par rapport au bâti du moteur-pompe indépendamment l'une de l'autre. Ceci provient du fait que lesdits secteurs angulaires sont aménagés dans le distributeur d'entrée-sortie qui est constitué d'une seule et même pièce.

En revanche et sous réserve de prévoir les moyens nécessaires, il serait à priori possible de faire varier la position angulaire du distributeur d'entrée-sortie par rapport au bâti du moteur-pompe. Cette fonction additionnelle non-prévue dans la demande de brevet N°3 001 775 permettrait notamment de prévoir pour le distributeur d'entrée-sortie une position angulaire lorsque le moteur-pompe hydraulique opère en mode « pompe » différente de celle retenue lorsque ledit moteur-pompe fonctionne en mode « moteur ». Ladite position angulaire pourrait également être déterminée par la pression et/ou la cylindrée sous laquelle opère le moteur-pompe hydraulique, ou par tout autre paramètre, quelle qu'en soit la nature. Il en découlerait un substantiel gain en rendement et en efficacité pour le moteur-pompe selon la demande de brevet N°3 001 775.

C'est donc pour améliorer significativement le rendement du moteur-pompe selon la demande de brevet N°3 001 775 notamment lorsque ledit moteur-pompe passe du mode « pompe » au mode « moteur » et inversement, que le déphaseur de distributeur pour moteur-pompe hydraulique selon l'invention permet, en fonction du mode de réalisation retenu :
- De faire varier de façon discrète la position angulaire du distributeur d'entrée-sortie par rapport au bâti de moteur-pompe, ladite position pouvant avoir au moins deux valeurs ;
   Et/ou
- De faire varier la position angulaire du distributeur d'entrée-sortie par rapport au bâti de moteur-pompe de façon continue, ladite position pouvant prendre un grand nombre voire une infinité de valeurs entre deux valeurs extrêmes.

En outre, le déphaseur de distributeur pour moteur-pompe hydraulique selon l'invention est prévu pour s'intégrer au moteur-pompe selon la demande de brevet N°3 001 775 sans remettre en cause la faisabilité dudit moteur-pompe, à prix de revient en fabrication modéré, et sans faire appel à un quelconque procédé de réalisation complexe ou matériau coûteux.

Il est entendu qu'outre son application au moteur-pompe selon la demande de brevet N°3 001 775, le déphaseur de distributeur pour moteur-pompe hydraulique selon l'invention peut s'appliquer à toute autre moteur-pompe hydraulique ou pneumatique dont la configuration permet avantageusement d'exploiter ledit déphaseur.

Les autres caractéristiques de la présente invention ont été décrites dans la description et dans les revendications secondaires dépendantes directement ou indirectement de la revendication principale.

Le déphaseur de distributeur pour moteur-pompe hydraulique suivant la présente invention est prévu pour un moteur-pompe hydraulique qui comprend un bâti de moteur-pompe d'une part, et un rotor central de moteur-pompe d'autre part, ce dernier hébergeant au moins un cylindre hydraulique dans lequel peut se mouvoir en translation un piston hydraulique, ledit rotor central coopérant avec un distributeur d'entrée-sortie qui lui présente un collecteur angulaire entrée-sortie de conduit interne et un collecteur angulaire entrée-sortie de conduit externe de sorte que lorsque ledit rotor tourne par rapport au bâti de moteur-pompe, le cylindre hydraulique - via un canal interne d'entrée-sortie de rotor central puis un orifice d'entrée-sortie de rotor central - est alternativement mis en relation avec un conduit interne d'entrée-sortie par le collecteur angulaire entrée-sortie de conduit interne puis avec un conduit externe d'entrée-sortie par le collecteur angulaire entrée-sortie de conduit externe, ledit déphaseur comprenant :
- Au moins un actionneur de déphasage qui prend directement ou indirectement appui sur le bâti de moteur-pompe pour pouvoir faire tourner le distributeur d'entrée-sortie autour de son axe longitudinal et sur une plage angulaire déterminée en agissant directement ou indirectement sur des moyens d'entraînement en rotation dont une partie au moins est solidaire dudit distributeur.

Le déphaseur de distributeur pour moteur-pompe hydraulique suivant la présente invention comprend un actionneur de déphasage qui est un vérin hydraulique à double effet dont le piston à double effet définit avec un cylindre de vérin et deux culasses de vérin deux chambres de vérin, la première dite chambre communiquant avec le conduit interne d'entrée-sortie tandis que la deuxième chambre de vérin communique avec le conduit externe d'entrée-sortie.

Le déphaseur de distributeur pour moteur-pompe hydraulique suivant la présente invention comprend un actionneur de déphasage qui est constitué de deux vérins hydrauliques à simple effet dont le piston à simple effet définit avec un cylindre de vérin et une culasse de vérin une chambre de vérin, la chambre de vérin du premier dit vérin hydraulique communiquant avec le conduit interne d'entrée-sortie tandis que la chambre de vérin du deuxième dit vérin hydraulique communique avec le conduit externe d'entrée-sortie tandis que le piston à simple effet du premier dit vérin hydraulique peut - via les moyens d'entraînement en rotation - entraîner le distributeur d'entrée-sortie dans un premier sens tandis que le piston à simple effet du deuxième dit vérin hydraulique peut - via les moyens d'entraînement en rotation - entraîner le distributeur d'entrée-sortie dans un deuxième sens.

Le déphaseur de distributeur pour moteur-pompe hydraulique suivant la présente invention comprend un actionneur de déphasage et/ou des moyens d'entraînement en rotation qui coopèrent avec au moins un ressort de rappel d'actionneur.

Le déphaseur de distributeur pour moteur-pompe hydraulique suivant la présente invention comprend une chambre de vérin qui héberge au moins un ressort de rappel d'actionneur qui prend directement ou indirectement appui sur la culasse de vérin d'une part, et sur le piston à double effet ou sur le piston à simple effet d'autre part.

Le déphaseur de distributeur pour moteur-pompe hydraulique suivant la présente invention comprend un actionneur de déphasage qui est un moteur électrique qui peut entraîner en rotation une vis sans fin tandis que les moyens d'entraînement en rotation sont constitués d'une couronne d'engrènement de vis solidaire du distributeur d'entrée-sortie et sur laquelle s'engrène la vis sans fin.

Le déphaseur de distributeur pour moteur-pompe hydraulique suivant la présente invention comprend des moyens d'entraînement en rotation qui comprennent un levier de déphasage solidaire du distributeur d'entrée-sortie, ledit levier étant raccordé à l'actionneur de déphasage directement ou par l'intermédiaire une biellette de déphasage.

Le déphaseur de distributeur pour moteur-pompe hydraulique suivant la présente invention comprend des moyens d'entraînement en rotation qui sont constitués d'une crémaillère de déphasage qui peut être mue en translation par l'actionneur de déphasage, ladite crémaillère coopérant avec une roue dentée de déphasage solidaire du distributeur d'entrée-sortie.

Le déphaseur de distributeur pour moteur-pompe hydraulique suivant la présente invention comprend un actionneur de déphasage qui est un vérin hydraulique piloté à simple ou double effet dont au moins une chambre de vérin peut être mise en relation soit avec une source haute-pression hydraulique soit avec une source basse-pression hydraulique par au moins une électrovanne de déphasage.

La description qui va suivre en regard des dessins annexés et donnés à titre d'exemples non limitatifs permettra de mieux comprendre l'invention, les caractéristiques qu'elle présente, et les avantages qu'elle est susceptible de procurer :

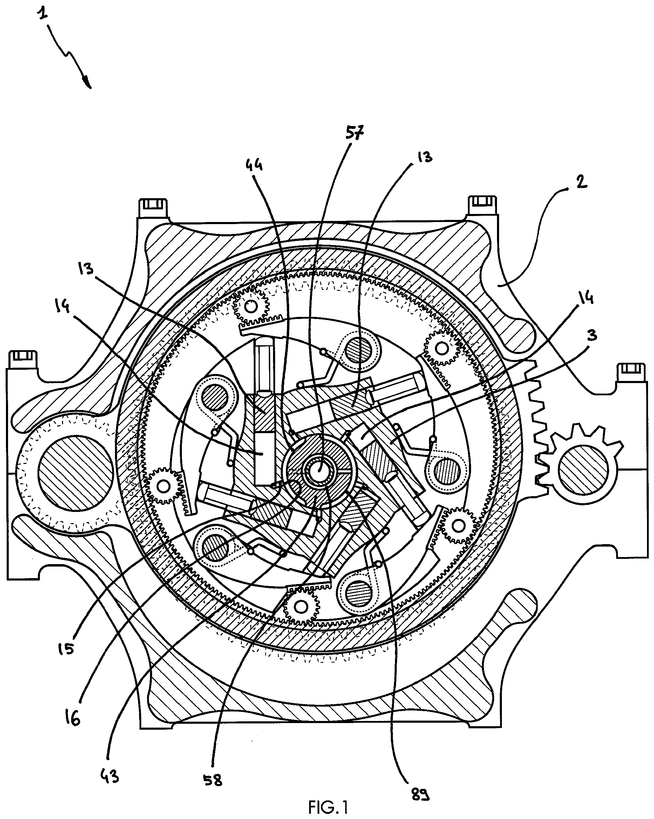

Figure 1 est une vue en coupe schématique du moteur-pompe hydraulique auquel s'applique le déphaseur de distributeur pour moteur-pompe hydraulique selon l'invention.

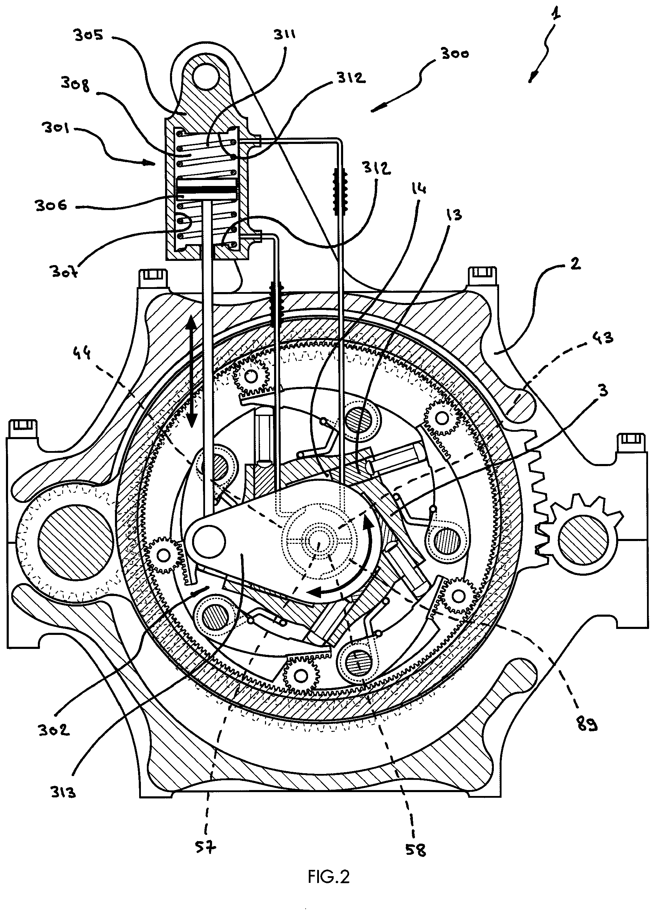

Figure 2 est une vue en coupe schématique du déphaseur de distributeur pour moteur-pompe hydraulique selon l'invention équipant le moteur-pompe hydraulique, ledit déphaseur étant notamment constitué d'un vérin hydraulique à double effet dont la première chambre de vérin communique avec le conduit interne d'entrée-sortie dudit moteur-pompe et dont la deuxième chambre de vérin communique avec le conduit externe d'entrée-sortie dudit moteur-pompe.

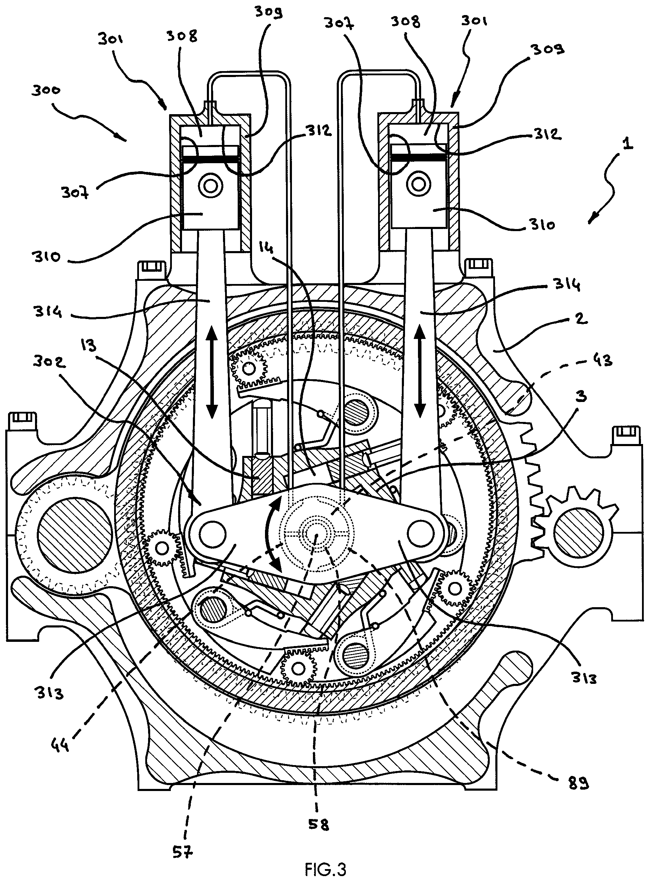

Figure 3 est une vue en coupe schématique du déphaseur de distributeur pour moteur-pompe hydraulique selon l'invention équipant le moteur-pompe hydraulique, ledit déphaseur étant notamment constitué de deux vérins hydrauliques à simple effet, le premier dit vérin étant relié au conduit interne d'entrée-sortie dudit moteur-pompe tandis que le deuxième dit vérin est relié au conduit externe d'entrée-sortie dudit moteur-pompe.

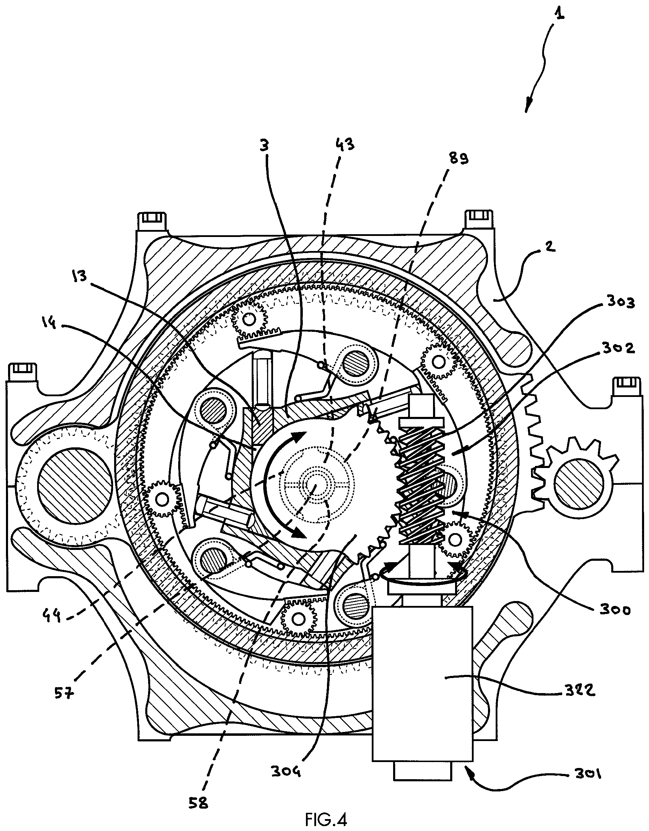

Figure 4 est une vue schématique du déphaseur de distributeur pour moteur-pompe hydraulique selon l'invention équipant le moteur-pompe hydraulique représenté en coupe schématique, ledit déphaseur étant notamment constitué d'un moteur électrique qui peut entraîner en rotation une vis sans fin coopérant avec une couronne d'engrènement de vis solidaire du distributeur d'entrée-sortie.

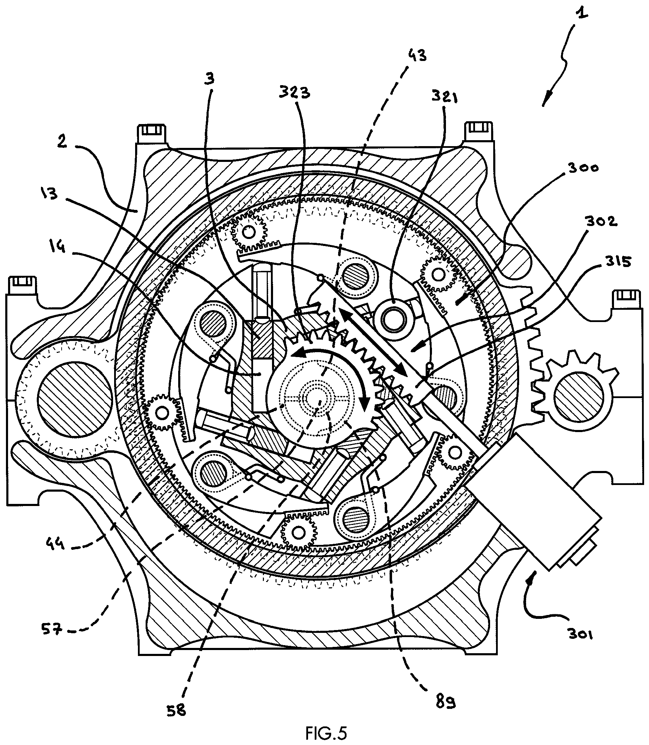

Figure 5 est une vue schématique du déphaseur de distributeur pour moteur-pompe hydraulique selon l'invention équipant le moteur-pompe hydraulique représenté en coupe schématique, les moyens d'entraînement en rotation dudit déphaseur étant constitués d'une crémaillère de déphasage qui coopère avec une roue dentée de déphasage solidaire du distributeur d'entrée-sortie.

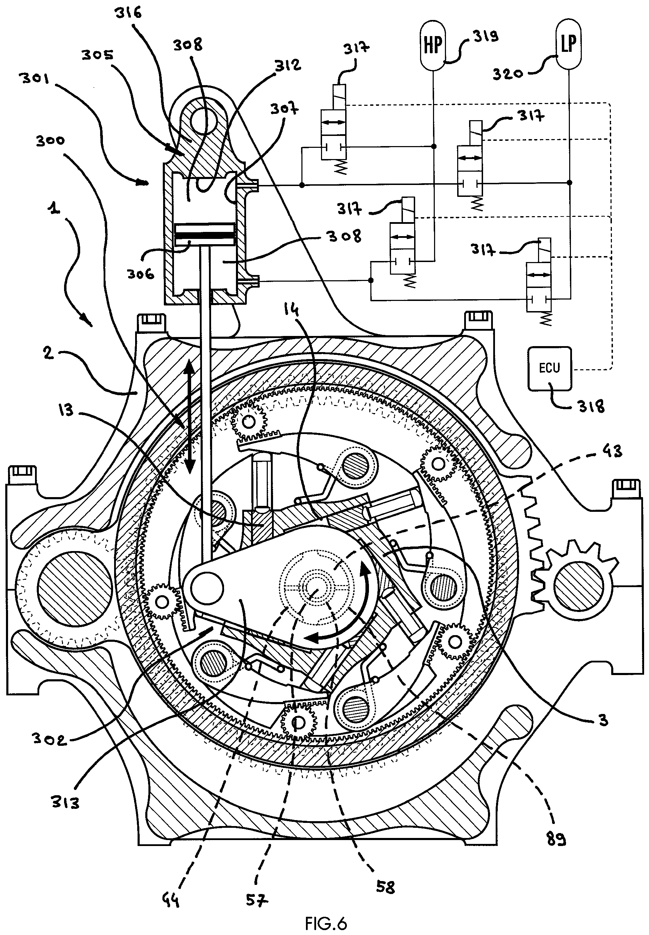

Figure 6 est une vue en coupe schématique du déphaseur de distributeur pour moteur-pompe hydraulique selon l'invention équipant le moteur-pompe hydraulique, ledit déphaseur comprenant un actionneur de déphasage constitué d'un vérin hydraulique piloté à double effet dont les chambres de vérin peuvent être mises en relation soit avec une source haute-pression hydraulique soit avec une source basse-pression hydraulique par des électrovannes de déphasage.

### DESCRIPTION DE L'INVENTION :

On a montré en figures 1 à 6 le déphaseur de distributeur pour moteur-pompe hydraulique 300, divers détails de ses composants, ses variantes, et ses accessoires.

Le déphaseur de distributeur pour moteur-pompe hydraulique 300 est prévu pour un moteur-pompe hydraulique 1 tel que montré en figure 1 et qui comprend un bâti de moteur-pompe 2 d'une part, et un rotor central de moteur-pompe 3 d'autre part, ce dernier hébergeant au moins un cylindre hydraulique 14 dans lequel peut se mouvoir en translation un piston hydraulique 13, ledit rotor central 3 coopérant avec un distributeur d'entrée-sortie 43 qui lui présente un collecteur angulaire entrée-sortie de conduit interne 44 et un collecteur angulaire entrée-sortie de conduit externe 89 de sorte que lorsque ledit rotor 3 tourne par rapport au bâti de moteur-pompe 2, le cylindre hydraulique 14 - via un canal interne d'entrée-sortie de rotor central 15 puis un orifice d'entrée-sortie de rotor central 16 - est alternativement mis en relation avec un conduit interne d'entrée-sortie 57 par le collecteur angulaire entrée-sortie de conduit interne 44 puis avec un conduit externe d'entrée-sortie 58 par le collecteur angulaire entrée-sortie de conduit externe 89.

Comme le montrent les figures 2 à 6, le déphaseur de distributeur pour moteur-pompe hydraulique 300 selon l'invention comprend au moins un actionneur de déphasage 301 qui prend directement ou indirectement appui sur le bâti de moteur-pompe 2 pour pouvoir faire tourner le distributeur d'entrée-sortie 43 autour de son axe longitudinal et sur une plage angulaire déterminée en agissant directement ou indirectement sur des moyens d'entraînement en rotation 302 dont une partie au moins est solidaire dudit distributeur 43.

On note que cette configuration s'applique pour que le distributeur d'entrée-sortie 43 soit un stator cylindrique logé avec un faible jeu dans un cylindre de stator aménagé au centre du rotor central de moteur pompe 3 et coaxialement à ce dernier, ou que le distributeur d'entrée-sortie 43 soit un stator axial constitué d'un flasque de distribution et d'un flasque d'équilibrage placés axialement de part et d'autre du rotor central de moteur-pompe 3 en regard respectivement d'une face de distribution et d'une face d'équilibrage aménagées sur ledit rotor 3 lesdits flasques étant mécaniquement reliés entre eux par un moyeu central de stator axial qui traverse axialement ledit rotor central 3 via un cylindre de stator aménagé au centre dudit rotor central 3 et coaxialement à ce dernier.

On remarque que pour en faciliter la rotation, le distributeur d'entrée-sortie 43 peut être en tout ou partie monté sur au moins un roulement à billes ou à rouleaux.

Selon une variante montrée en figure 2 du déphaseur de distributeur pour moteur-pompe hydraulique 300 selon l'invention, prévoit que l'actionneur de déphasage 301 peut être un vérin hydraulique à double effet 305 dont le piston à double effet 306 définit avec un cylindre de vérin 307 et deux culasses de vérin 312 deux chambres de vérin 308, la première dite chambre 308 communiquant avec le conduit interne d'entrée-sortie 57 tandis que la deuxième chambre de vérin 308 communique avec le conduit externe d'entrée-sortie 58 de sorte que dès que le moteur-pompe hydraulique 1 commence à opérer en mode « pompe », le piston à double effet 306 agit naturellement sur les moyens d'entraînement en rotation 302 afin que le distributeur d'entrée-sortie 43 tourne dans un premier sens tandis que lorsque ledit moteur-pompe hydraulique 1 commence à opérer en mode « moteur », ledit piston 306 agit automatiquement sur lesdits moyens 302 de sorte que ledit distributeur 43 tourne dans un deuxième sens.

Une autre variante montrée en figure 3 du déphaseur de distributeur pour moteur-pompe hydraulique 300 selon l'invention prévoit que l'actionneur de déphasage 301 peut être constitué de deux vérins hydrauliques à simple effet 309 dont le piston à simple effet 310 définit avec un cylindre de vérin 307 et une culasse de vérin 312 une chambre de vérin 308, la chambre de vérin 308 du premier dit vérin hydraulique 309 communiquant avec le conduit interne d'entrée-sortie 57 tandis que la chambre de vérin 308 du deuxième dit vérin hydraulique 309 communique avec le conduit externe d'entrée-sortie 58 tandis que le piston à simple effet 310 du premier dit vérin hydraulique 309 peut - via les moyens d'entraînement en rotation 302 - entraîner le distributeur d'entrée-sortie 43 dans un premier sens tandis que le piston à simple effet 310 du deuxième dit vérin hydraulique 309 peut - via les moyens d'entraînement en rotation 302 - entraîner le distributeur d'entrée-sortie 43 dans un deuxième sens.

Ainsi, lorsque le moteur-pompe hydraulique 1 commence à opérer en mode « pompe », le piston à simple effet 310 du premier vérin hydraulique à simple effet 309 agit naturellement sur les moyens d'entraînement en rotation 302 de sorte que le distributeur d'entrée-sortie 43 tourne dans un premier sens tandis que lorsque ledit moteur-pompe hydraulique 1 commence à opérer en mode « moteur », le piston à simple effet 310 du deuxième vérin hydraulique à simple effet 309 agit automatiquement sur lesdits moyens 302 de sorte que ledit distributeur 43 tourne dans un deuxième sens.

On note que l'actionneur de déphasage 301 et/ou les moyens d'entraînement en rotation 302 peuvent coopérer avec au moins un ressort de rappel d'actionneur 311 qui exerce un effort antagoniste à celui que peut exercer l'actionneur de déphasage 301.

Comme l'illustre la figure 2, la chambre de vérin 308 peut héberger au moins un ressort de rappel d'actionneur 311 qui prend directement ou indirectement appui sur la culasse de vérin 312 d'une part, et sur le piston à double effet 306 ou sur le piston à simple effet 310 d'autre part de sorte que par exemple, lorsque la pression qui règne dans le conduit interne d'entrée-sortie 57 est identique ou comparable à celle qui règne dans le conduit externe d'entrée-sortie 58, la position angulaire du distributeur d'entrée-sortie 43 est approximativement centrée par rapport aux positions angulaires extrêmes dudit distributeur 43.

La variante de réalisation du déphaseur de distributeur pour moteur-pompe hydraulique 300 selon l'invention telle que montrée en figure 4 prévoit que l'actionneur de déphasage 301 peut être un moteur électrique 322 qui peut entraîner en rotation une vis sans fin 303 tandis que les moyens d'entraînement en rotation 302 sont constitués d'une couronne d'engrènement de vis 304 solidaire du distributeur d'entrée-sortie 43 et sur laquelle s'engrène la vis sans fin 303 de sorte à entraîner en rotation ladite couronne 304, cette dernière entraînant à son tour le distributeur d'entrée-sortie 43 en rotation sur une plage angulaire déterminée.

On remarquera en figures 2, 3 et 6 que les moyens d'entraînement en rotation 302 peuvent comporter un levier de déphasage 313 solidaire du distributeur d'entrée-sortie 43, ledit levier 313 étant raccordé à l'actionneur de déphasage 301 directement ou par l'intermédiaire une biellette de déphasage 314 comme le précise la figure 3.

On note que si le levier de déphasage 313 est directement raccordé à l'actionneur de déphasage 301 ce dernier est préférablement articulé sur le bâti de moteur-pompe 2, tandis que si ledit levier 313 est raccordé à l'actionneur de déphasage 301 par l'intermédiaire d'une biellette de déphasage 314, ledit actionneur 301 est préférablement monté fixe sur ledit bâti 2 et solidairement de ce dernier.

La figure 5 expose qu'à titre de variante du déphaseur de distributeur pour moteur-pompe hydraulique 300 selon l'invention, les moyens d'entraînement en rotation 302 peuvent être constitués d'une crémaillère de déphasage 315 qui peut être mue en translation par l'actionneur de déphasage 301, ladite crémaillère 315 coopérant avec une roue dentée de déphasage 323 solidaire du distributeur d'entrée-sortie 43.

On note que la crémaillère de déphasage 315 peut être guidée dans le bâti de moteur-pompe 2 par une glissière, un galet 321 ou par tout autre moyen de guidage connu de l'homme de l'art.

La figure 6 quant à elle montre que l'actionneur de déphasage 301 peut être un vérin hydraulique piloté 316 à simple ou double effet dont au moins une chambre de vérin 308 peut être mise en relation soit avec une source haute-pression hydraulique 319 soit avec une source basse-pression hydraulique 320 par au moins une électrovanne de déphasage 317 cette dernière étant elle-même pilotée par un calculateur de gestion du déphasage 318.

En ce cas, le distributeur d'entrée-sortie 43 et/ou l'actionneur de déphasage 301 et/ou les moyens d'entraînement en rotation 302 peuvent être pourvus d'un capteur de position qui retourne directement ou indirectement au calculateur de gestion du déphasage 318 la position angulaire du distributeur d'entrée-sortie 43 par rapport au bâti de moteur-pompe 2.

### FONCTIONNEMENT DE L'INVENTION :

Le fonctionnement du déphaseur de distributeur pour moteur-pompe hydraulique 300 selon l'invention se comprend aisément à partir des figures 1 à 6.

La figure 1 montre le distributeur d'entrée-sortie 43 du moteur-pompe hydraulique 1 auquel s'applique le déphaseur de distributeur pour moteur-pompe hydraulique selon l'invention, de sorte que son collecteur angulaire entrée-sortie de conduit interne 44 est relié au conduit interne d'entrée-sortie 57, et son collecteur angulaire entrée-sortie de conduit externe 89 est relié au conduit externe d'entrée-sortie 58.

On déduit aisément de la figure 1 que lorsque le rotor central de moteur-pompe 3 tourne dans le sens des aiguilles d'une montre, il entraine avec lui les cylindres hydrauliques 14 qu'il héberge. Ce faisant, les pistons hydrauliques 13 se meuvent en translation chacun dans le cylindre hydraulique 14 avec lequel il coopère.

Selon la figure 1, si le moteur-pompe hydraulique 1 opère en mode « pompe » - c'est à dire qu'il consomme du travail fourni par une source motrice extérieure pour générer un débit d'huile sous pression, ses pistons hydrauliques 13 situés à gauche de l'axe du rotor central de moteur-pompe 3 aspirent de l'huile dans le collecteur angulaire entrée-sortie de conduit interne 44. Une fois aspirée, ladite huile rejoint les cylindres hydrauliques 14 correspondants auxdits pistons 13 successivement via l'orifice d'entrée-sortie de rotor central 16 puis le canal interne d'entrée-sortie de rotor central 15, ledit orifice 16 et ledit canal 15 reliant à ce moment-là lesdits cylindres 14 avec le collecteur angulaire entrée-sortie de conduit interne 44.

Le rotor central de moteur-pompe 3 continuant à tourner, lesdits pistons 13 passent à droite de l'axe du rotor central de moteur-pompe 3. A partir de ce moment, lesdits pistons 13 refoulent l'huile qu'ils ont préalablement aspirée dans le collecteur angulaire entrée-sortie de conduit interne 44 hors du cylindre hydraulique 14 avec lequel ils coopèrent. Ainsi refoulée, ladite huile passe successivement dans le canal interne d'entrée-sortie de rotor central 15 puis au travers de l'orifice d'entrée-sortie de rotor central 16 avant de rejoindre le collecteur angulaire entrée-sortie de conduit externe 89.

Un débit d'huile s'établit ainsi entre le conduit interne d'entrée-sortie 57 et le conduit externe d'entrée-sortie 58, et depuis ledit conduit interne 57 vers ledit conduit externe 58.

Selon la cylindrée et la pression sous lesquelles opère le moteur-pompe hydraulique 1 et selon que ce dernier opère en mode « pompe » ou en mode « moteur », le phasage le plus propice au rendement énergétique dudit moteur-pompe 1 du distributeur d'entrée-sortie 43 par rapport au bâti de moteur-pompe 2 se déplace de quelques degrés.

Pour donner au moteur-pompe hydraulique 1 le meilleur rendement possible en toutes circonstances, il est donc avantageux de contrôler le phasage du distributeur d'entrée-sortie 43 par rapport au bâti de moteur-pompe 2.

C'est pourquoi le déphaseur de distributeur pour moteur-pompe hydraulique 300 selon l'invention peut faire tourner autour de son axe longitudinal et sur une plage angulaire déterminée le distributeur d'entrée-sortie 43 par rapport au bâti de moteur-pompe 2 au moyen de l'actionneur de déphasage 301.

A cette fin, l'actionneur de déphasage 301 est prévu pour agir directement ou indirectement sur les moyens d'entraînement en rotation 302 solidaires du distributeur d'entrée-sortie 43.

Selon l'exemple de réalisation du déphaseur de distributeur pour moteur-pompe hydraulique 300 selon l'invention montré en figure 2, on comprend que le phasage du distributeur d'entrée-sortie 43 par rapport au bâti de moteur-pompe 2 change automatiquement selon que le moteur-pompe hydraulique 1 opère en mode « pompe » ou en mode « moteur ». En effet, le mode « pompe » ou « moteur » se caractérise par une différence de pression d'huile positive ou négative entre ladite pression régnant dans le conduit interne d'entrée-sortie 57 et celle régnant dans le conduit externe d'entrée-sortie 58.

En figure 2, on comprend que si la pression qui règne dans le conduit interne d'entrée-sortie 57 est supérieure à celle régnant dans le conduit externe d'entrée-sortie 58, la pression dans la chambre de vérin 308 inférieure du vérin hydraulique à double effet 305 sera supérieure à celle régnant dans la chambre de vérin 308 supérieure dudit vérin 305. Il en résultera que le piston à double effet 306 va tirer sur le levier de déphasage 313 et que le distributeur d'entrée-sortie 43 va tourner dans le sens des aiguilles d'une montre.

Si la situation s'inverse - ce qui est caractéristique d'un changement de mode « pompe » à « moteur » du moteur-pompe hydraulique 1 ou inversement - et que la pression dans la chambre de vérin 308 inférieure du vérin hydraulique à double effet 305 devient inférieure à celle régnant dans la chambre de vérin 308 supérieure dudit vérin 305, le distributeur d'entrée-sortie 43 tournera dans le sens inverse des aiguilles du montre.

La figure 3 illustre le même principe mis en oeuvre non pas avec un vérin hydraulique à double effet 305, mais avec deux vérins hydrauliques à simple effet 309. L'effet produit par cette configuration est similaire à celui produit par celle montrée en figure 2.

Les figures 4, 5 et 6 aboutissent au même résultat de rotation du distributeur d'entrée-sortie 43, mais le sens et l'amplitude de ladite rotation peuvent être déterminés de façon plus analytique ou à partir de données cartographiques par un calculateur de gestion du déphasage 318 qui peut régler précisément la position angulaire dudit distributeur 43 en fonction d'autant de paramètres que nécessaire pour conférer au moteur-pompe hydraulique 1 le meilleur rendement et la meilleure efficacité possibles.

Les possibilités du déphaseur de distributeur pour moteur-pompe hydraulique 300 selon l'invention ne s'en limitent pas aux applications qui viennent d'être décrites et il doit d'ailleurs être entendu que la description qui précède n'a été donnée qu'à titre d'exemple. L'objet de l'invention est défini par les revendications qui suivent.

## Revendications

1. Moteur-pompe hydraulique (1) comprenant un déphaseur de distributeur (300) ledit un moteur-pompe hydraulique (1) comprenant un bâti de moteur-pompe (2) d'une part, et un rotor central de moteur-pompe (3) d'autre part, ce dernier hébergeant au moins un cylindre hydraulique (14) dans lequel peut se mouvoir en translation un piston hydraulique (13), ledit rotor central (3) coopérant avec un distributeur d'entrée-sortie (43) qui lui présente un collecteur angulaire entrée-sortie de conduit interne (44) et un collecteur angulaire entrée-sortie de conduit externe (89) de sorte que lorsque ledit rotor (3) tourne par rapport au bâti de moteur-pompe (2), le cylindre hydraulique (14) - via un canal interne d'entrée-sortie de rotor central (15) puis un orifice d'entrée-sortie de rotor central (16) - est alternativement mis en relation avec un conduit interne d'entrée-sortie (57) par le collecteur angulaire entrée-sortie de conduit interne (44) puis avec un conduit externe d'entrée-sortie (58) par le collecteur angulaire entrée-sortie de conduit externe (89), ledit déphaseur (300) étant
**caractérisé en ce qu'il** comprend :
• Au moins un actionneur de déphasage (301) qui prend directement ou indirectement appui sur le bâti de moteur-pompe (2) pour pouvoir faire tourner le distributeur d'entrée-sortie (43) autour de son axe longitudinal et sur une plage angulaire déterminée en agissant directement ou indirectement sur des moyens d'entraînement en rotation (302) dont une partie au moins est solidaire dudit distributeur (43).

2. Moteur-pompe hydraulique (1) comprenant un déphaseur de distributeur (300) suivant la revendication 1, **caractérisé en ce que** l'actionneur de déphasage (301) est un vérin hydraulique à double effet (305) dont le piston à double effet (306) définit avec un cylindre de vérin (307) et deux culasses de vérin (312) deux chambres de vérin (308), la première dite chambre (308) communiquant avec le conduit interne d'entrée-sortie (57) tandis que la deuxième chambre de vérin (308) communique avec le conduit externe d'entrée-sortie (58).

3. Moteur-pompe hydraulique (1) comprenant un déphaseur de distributeur (300) suivant la revendication 1, **caractérisé en ce que** l'actionneur de déphasage (301) est constitué de deux vérins hydrauliques à simple effet (309) dont le piston à simple effet (310) définit avec un cylindre de vérin (307) et une culasse de vérin (312) une chambre de vérin (308), la chambre de vérin (308) du premier dit vérin hydraulique (309) communiquant avec le conduit interne d'entrée-sortie (57) tandis que la chambre de vérin (308) du deuxième dit vérin hydraulique (309) communique avec le conduit externe d'entrée-sortie (58) tandis que le piston à simple effet (310) du premier dit vérin hydraulique (309) peut - via les moyens d'entraînement en rotation (302) - entraîner le distributeur d'entrée-sortie (43) dans un premier sens tandis que le piston à simple effet (310) du deuxième dit vérin hydraulique (309) peut - via les moyens d'entraînement en rotation (302) - entraîner le distributeur d'entrée-sortie (43) dans un deuxième sens.

4. Moteur-pompe hydraulique (1) comprenant un déphaseur de distributeur (300) suivant la revendication 1, **caractérisé en ce que** l'actionneur de déphasage (301) et/ou les moyens d'entraînement en rotation (302) coopèrent avec au moins un ressort de rappel d'actionneur (311).

5. Moteur-pompe hydraulique (1) comprenant un déphaseur de distributeur (300) suivant l'une quelconque des revendications 2 ou 3, **caractérisé en ce que** la chambre de vérin (308) héberge au moins un ressort de rappel d'actionneur (311) qui prend directement ou indirectement appui sur la culasse de vérin (312) d'une part, et sur le piston à double effet (306) ou sur le piston à simple effet (310) d'autre part.

6. Moteur-pompe hydraulique (1) comprenant un déphaseur de distributeur (300) suivant la revendication 1, **caractérisé en ce que** l'actionneur de déphasage (301) est un moteur électrique (322) qui peut entraîner en rotation une vis sans fin (303) tandis que les moyens d'entraînement en rotation (302) sont constitués d'une couronne d'engrènement de vis (304) solidaire du distributeur d'entrée-sortie (43) et sur laquelle s'engrène la vis sans fin (303).

7. Moteur-pompe hydraulique (1) comprenant un déphaseur de distributeur (300) suivant la revendication 1, **caractérisé en ce que** les moyens d'entraînement en rotation (302) comprennent un levier de déphasage (313) solidaire du distributeur d'entrée-sortie (43), ledit levier (313) étant raccordé à l'actionneur de déphasage (301) directement ou par l'intermédiaire une biellette de déphasage (314).

8. Moteur-pompe hydraulique (1) comprenant un déphaseur de distributeur (300) suivant la revendication 1, **caractérisé en ce que** les moyens d'entraînement en rotation (302) sont constitués d'une crémaillère de déphasage (315) qui peut être mue en translation par l'actionneur de déphasage (301), ladite crémaillère (315) coopérant avec une roue dentée de déphasage (323) solidaire du distributeur d'entrée-sortie (43).

9. Moteur-pompe hydraulique (1) comprenant un déphaseur de distributeur (300) suivant la revendication 1, **caractérisé en ce que** l'actionneur de déphasage (301) est un vérin hydraulique piloté (316) à simple ou double effet dont au moins une chambre de vérin (308) peut être mise en relation soit avec une source haute-pression hydraulique (319) soit avec une source basse-pression hydraulique (320) par au moins une électrovanne de déphasage (317).

## Patentansprüche

1. Hydraulisches Motor-Pumpe-Aggregat (1), das einen Verteiler-Phasenschieber (300) enthält, wobei das eine hydraulische Motor-Pumpe-Aggregat (1) einerseits ein Motor-Pumpe-Aggregat-Gehäuse (2) und andererseits einen zentralen Motor-Pumpe-Aggregat-Rotor (3) enthält, wobei in letzterem mindestens ein Hydraulikzylinder (14) untergebracht ist, in dem ein Hydraulikkolben (13) sich translatorisch verschieben kann, wobei der zentrale Rotor (3) mit einem Eingangs-/Ausgangs-Verteiler (43) zusammenwirkt, der ihm einen winkelförmigen Eingangs-/Ausgangs-Kollektor einer inneren Leitung (44) und einen winkelförmigen Eingangs-/Ausgangskollektor einer äußeren Leitung (89) präsentiert, so dass, wenn der Rotor (3) sich bezüglich des Motor-Pumpe-Aggregat-Gehäuses (2) dreht, der Hydraulikzylinder (14) - über einen inneren Eingangs-/Ausgangskanal des zentralen Rotors (15), dann eine Eingangs-/Ausgangsöffnung des zentralen Rotors (16) - alternativ mit einer inneren Eingangs-/Ausgangsleitung (57) durch den winkelförmigen Eingangs-/Ausgangskollektor der inneren Leitung (44), dann mit einer äußeren Eingangs-/Ausgangsleitung (58) durch den winkelförmigen Eingangs-/Ausgangskollektor der äußeren Leitung (89) in Verbindung gebracht wird, wobei der Phasenschieber (300) **dadurch gekennzeichnet ist, dass** er enthält:
• mindestens einen Phasenverschiebungsantrieb (301), der direkt oder indirekt auf dem Motor-Pumpe-Aggregat-Gehäuse (2) aufliegt, um den Eingangs-/Ausgangs-Verteiler (43) um seine Längsachse und über einen bestimmten Winkelbereich drehen lassen zu können, indem er direkt oder indirekt auf Drehantriebseinrichtungen (302) einwirkt, von denen mindestens ein Teil fest mit dem Verteiler (43) verbunden ist.

2. Hydraulisches Motor-Pumpe-Aggregat (1), das einen Verteiler-Phasenschieber (300) nach Anspruch 1 enthält, **dadurch gekennzeichnet, dass** der Phasenverschiebungsantrieb (301) ein doppeltwirkender Hydraulikzylinder (305) ist, dessen doppeltwirkender Kolben (306) mit einem Arbeitszylinder-Zylinder (307) und zwei Arbeitszylinder-Zylinderköpfen (312) zwei Arbeitszylinder-Kammern (308) definiert, wobei die erste Kammer (308) mit der inneren Eingangs-/Ausgangsleitung (57) in Verbindung steht, während die zweite Arbeitszylinder-Kammer (308) mit der äußeren Eingangs-/Ausgangsleitung (58) in Verbindung steht.

3. Hydraulisches Motor-Pumpe-Aggregat (1), das einen Verteiler-Phasenschieber (300) nach Anspruch 1 enthält, **dadurch gekennzeichnet, dass** der Phasenverschiebungsantrieb (301) aus zwei einfachwirkenden Hydraulikzylindern (309) besteht, deren einfachwirkender Kolben (310) mit einem Arbeitszylinder-Zylinder (307) und einem Arbeitszylinder-Zylinderkopf (312) eine Arbeitszylinder-Kammer (308) definiert, wobei die Arbeitszylinder-Kammer (308) des ersten Hydraulikzylinders (309) mit der inneren Eingangs-/Ausgangsleitung (57) in Verbindung steht, während die Arbeitszylinder-Kammer (308) des zweiten Hydraulikzylinders (309) mit der äußeren Eingangs-/Ausgangsleitung (58) in Verbindung steht, während der einfachwirkende Kolben (310) des ersten Hydraulikzylinders (309) - über die Drehantriebseinrichtungen (302) - den Eingangs-/Ausgangsverteiler (43) in einer ersten Richtung antreiben kann, während der einfachwirkende Kolben (310) des zweiten Hydraulikzylinders (309) - über die Drehantriebseinrichtungen (302) - den Eingangs-/Ausgangsverteiler (43) in einer zweiten Richtung antreiben kann.

4. Hydraulisches Motor-Pumpe-Aggregat (1), das einen Verteiler-Phasenschieber (300) nach Anspruch 1 enthält, **dadurch gekennzeichnet, dass** der Phasenverschiebungsantrieb (301) und/oder die Drehantriebseinrichtungen (302) mit mindestens einer Antriebsrückstellfeder (311) zusammenwirken.

5. Hydraulisches Motor-Pumpe-Aggregat (1), das einen Verteiler-Phasenschieber (300) nach einem der Ansprüche 2 oder 3 enthält, **dadurch gekennzeichnet, dass** in der Arbeitszylinder-Kammer (308) mindestens eine Antriebsrückstellfeder (311) untergebracht ist, die direkt oder indirekt auf dem Arbeitszylinder-Zylinderkopf (312) einerseits und auf dem doppeltwirkenden Kolben (306) oder dem einfachwirkenden Kolben (310) andererseits aufliegt.

6. Hydraulisches Motor-Pumpe-Aggregat (1), das einen Verteiler-Phasenschieber (300) nach Anspruch 1 enthält, **dadurch gekennzeichnet, dass** der Phasenverschiebungsantrieb (301) ein Elektromotor (322) ist, der eine Schnecke (303) in Drehung versetzen kann, während die Drehantriebseinrichtungen (302) aus einem Schneckeneingriffskranz (304) bestehen, der fest mit dem Eingangs-/Ausgangsverteiler (43) verbunden ist und in den die Schnecke (303) eingreift.

7. Hydraulisches Motor-Pumpe-Aggregat (1), das einen Verteiler-Phasenschieber (300) nach Anspruch 1 enthält, **dadurch gekennzeichnet, dass** die Drehantriebseinrichtungen (302) einen Phasenverschiebungshebel (313) enthalten, der fest mit dem Eingangs-/Ausgangsverteiler (43) verbunden ist, wobei der Hebel (313) an den Phasenverschiebungsantrieb (301) direkt oder mittels einer Phasenverschiebungsstange (314) angeschlossen ist.

8. Hydraulisches Motor-Pumpe-Aggregat (1), das einen Verteiler-Phasenschieber (300) nach Anspruch 1 enthält, **dadurch gekennzeichnet, dass** die Drehantriebseinrichtungen (302) aus einer Phasenverschiebungszahnstange (315) bestehen, die vom Phasenverschiebungsantrieb (301) in Translation verschoben werden kann, wobei die Zahnstange (315) mit einem Phasenverschiebungszahnrad (323) zusammenwirkt, das fest mit dem Eingangs-/Ausgangsverteiler (43) verbunden ist.

9. Hydraulisches Motor-Pumpe-Aggregat (1), das einen Verteiler-Phasenschieber (300) nach Anspruch 1 enthält, **dadurch gekennzeichnet, dass** der Phasenverschiebungsantrieb (301) ein einfach oder doppelt wirkender gesteuerter Hydraulikzylinder (316) ist, von dem mindestens eine Arbeitszylinder-Kammer (308) entweder mit einer hydraulischen Hochdruckquelle (319) oder mit einer hydraulischen Niederdruckquelle (320) durch mindestens ein Phasenverschiebungs-Elektroventil (317) in Verbindung gebracht werden kann.

## Claims

1. Hydraulic pump motor (1) comprising a distributor phase-shifter (300), said one hydraulic pump motor (1) comprising a pump motor frame (2) on the one hand, and a central pump motor rotor (3) on the other hand, the latter housing at least one hydraulic cylinder (14) in which a hydraulic piston (13) can move in translation, said central rotor (3) cooperating with an input-output distributor (43) which offers an inner duct angular input-output manifold (44) and an outer duct angular input-output manifold (89) such that when said rotor (3) rotates relative to the pump motor frame (2), the hydraulic cylinder (14) - via a central rotor inner input-output channel (15) then a central rotor input-output orifice (16) - is alternately connected with an inner input-output duct (57) by the inner duct angular input-output manifold (44) then with an outer input-output duct (58) by the outer duct angular input-output manifold (89), said phase shifter (300) being **characterized in that** it comprises:
• at least one phase-shift actuator (301) which bears directly or indirectly on the pump motor frame (2) to be able to rotate the input-output distributor (43) about its longitudinal axis and over a determined angular range by acting directly or indirectly on rotation driving means (302) of which at least a part is secured to said distributor (43).

2. Hydraulic pump motor (1) comprising a distributor phase-shifter (300) according to Claim 1, **characterized in that** the phase-shift actuator (301) is a dual-acting hydraulic jack (305) whose dual-acting piston (306) defines, with a jack cylinder (307) and two jack blocks (312), two jack chambers (308), the first said chamber (308) communicating with the inner input-output duct (57) while the second jack chamber (308) communicates with the outer input-output duct (58).

3. Hydraulic pump motor (1) comprising a distributor phase-shifter (300) according to Claim 1, **characterized in that** the phase-shift actuator (301) is composed of two single-acting hydraulic jacks (309) whose single-acting piston (310) defines, with a jack cylinder (307) and a jack block (312), a jack chamber (308), the jack chamber (308) of the first said hydraulic jack (309) communicating with the inner input-output duct (57) while the jack chamber (308) of the second said hydraulic jack (309) communicates with the outer input-output duct (58) while the single-acting piston (310) of the first said hydraulic jack (309) can - via the rotation driving means (302) - drive the input-output distributor (43) in a first direction while the single-acting piston (310) of the second said hydraulic jack (309) can - via the rotation driving means (302) - drive the input-output distributor (43) in a second direction.

4. Hydraulic pump motor (1) comprising a distributor phase-shifter (300) according to Claim 1, **characterized in that** the phase-shift actuator (301) and/or the rotation driving means (302) cooperate with at least one actuator return spring (311).

5. Hydraulic pump motor (1) comprising a distributor phase-shifter (300) according to either one of Claims 2 and 3, **characterized in that** the jack chamber (308) houses at least one actuator return spring (311) which bears directly or indirectly on the jack block (312) on one side, and on the dual-acting piston (306) or on the single-acting piston (310) on the other side.

6. Hydraulic pump motor (1) comprising a distributor phase-shifter (300) according to Claim 1, **characterized in that** the phase-shift actuator (301) is an electric motor (322) which can drive a worm screw (303) in rotation while the rotation driving means (302) are composed of a screw-meshing crown ring (304) secured to the input-output distributor (43) and on which the worm screw (303) meshes.

7. Hydraulic pump motor (1) comprising a distributor phase-shifter (300) according to Claim 1, **characterized in that** the rotation driving means (302) comprise a phase-shift lever (313) secured to the input-output distributor (43), said lever (313) being coupled to the phase-shift actuator (301) directly or via a phase-shift connecting rod (314).

8. Hydraulic pump motor (1) comprising a distributor phase-shifter (300) according to Claim 1, **characterized in that** the rotation driving means (302) are composed of a phase-shift rack (315) which can be moved in translation by the phase-shift actuator (301), said rack (315) cooperating with a phase-shift toothed wheel (323) secured to the input-output distributor (43).

9. Hydraulic pump motor (1) comprising a distributor phase-shifter (300) according to Claim 1, **characterized in that** the phase-shift actuator (301) is a single- or dual-acting controlled hydraulic jack (316) of which at least one jack chamber (308) can be connected either with a high-pressure hydraulic source (319) or with a low-pressure hydraulic source (320) by at least one phase-shift solenoid valve (317).
